# DEMANDE DE BREVET EUROPEEN

(11) **EP 3 690 685 A1**
(43) Date de publication de la demande: **05.08.2020**
(21) Numéro de dépôt: 20153695.0
(22) Date de dépôt: 24.01.2020
(51) Int. Cl.: G06F 21/32, H04L 29/06

(54) **PROCEDE D'AUTHENTIFICATION D'UN UTILISATEUR ET DISPOSITIF ASSOCIE**

(30) Priorité: 31.01.2019 FR 1900934
(71) Demandeur: IDEMIA France, 92400 Courbevoie (FR)
(72) Inventeur: BOUSQUET, Nicolas, 92400 COURBEVOIE (FR); ADJAZ, Aghiles, 92400 COURBEVOIE (FR); MARTIN-MARTINASSO, Ludovic, 92400 COURBEVOIE (FR); RAFFIN, Nicolas, 92400 COURBEVOIE (FR); BARREAU, Cédric, 92400 COURBEVOIE (FR)
(74) Mandataire: Cabinet Beau de Loménie

(57) **Abrégé**

L'invention concerne essentiellement un procédé d'authentification d'un utilisateur (U) d'un dispositif électronique au moyen d'une donnée biométrique,
mis en œuvre par ledit dispositif électronique, ledit dispositif électronique comprenant une première puce électronique (302) apte à effectuer une transaction sécurisée,
ledit procédé comprenant les étapes suivantes :
- obtention (S400) de la donnée biométrique comprenant une sous étape d'acquisition (S406) d'une empreinte biométrique,
- réception (S412) d'une commande d'initialisation d'une transaction sécurisée, envoyée par un terminal de transaction (320), l'étape (S400) d'obtention débutant avant l'étape (S412) de réception de la commande d'initialisation, puis
- authentification (S414) de l'utilisateur (U) au moyen de la donnée biométrique obtenue,
dans lequel l'étape (S414) d'authentification de l'utilisateur (U) est mise en œuvre par la première puce électronique (302), une authentification réussie de l'utilisateur (U) permettant d'autoriser la transaction sécurisée.

## Description

### Domaine Technique

La présente invention se rapporte au domaine des transactions effectuées au moyen d'un dispositif électronique, et concerne plus particulièrement un procédé d'authentification d'un utilisateur d'un dispositif électronique au moyen d'une donnée biométrique, pour autoriser ou rejeter une transaction sécurisée.

### Technique antérieure

De façon connue, une carte à puce peut utiliser des données biométriques pour authentifier un utilisateur, le résultat de cette authentification permettant de valider ou de rejeter une transaction mise en œuvre par cette carte à puce.

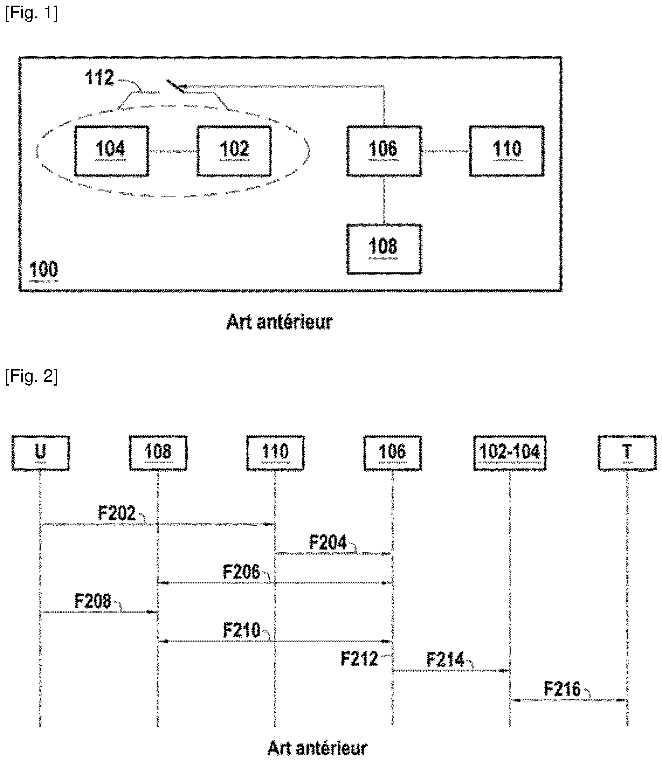

Comme le montre la **figure 1****,** une telle carte 100 à puce comprend une première puce électronique 102 apte à mettre en œuvre une transaction sécurisée, connectée électriquement à une interface de communications 104.

En outre, la carte 100 à puce comprend une deuxième puce électronique 106 apte à mettre en œuvre une authentification, connectée électriquement à un lecteur d'empreintes 108 et un bouton 110 apte à déclencher la lecture d'empreinte digitale. La deuxième puce électronique 106 est en outre connectée électriquement à la première puce électronique 102 et à l'interface de communications 104 au moyen d'un interrupteur 112.

Comme le montre la **figure 2****,** lorsque l'utilisateur U de la carte 100 à puce souhaite qu'une transaction soit mise en œuvre au moyen de cette carte 100, il presse le bouton 110 (étape F202), ce qui active la deuxième puce électronique 106 (étape F204).

Dans une étape F206, la deuxième puce électronique 106 active alors le lecteur d'empreinte 108, puis l'utilisateur U positionne un de ses doigts au niveau du lecteur d'empreinte 108 (étape F208) afin que l'obtention de l'empreinte soit mise en œuvre. Le lecteur d'empreinte 108 transmet alors, dans une étape F210, une image de l'empreinte à la deuxième puce électronique 106.

La deuxième puce électronique 106 compare alors l'image reçue à une image de référence stockée dans la deuxième puce électronique 106 (étape F212). Si l'image reçue correspond à l'image de référence, la deuxième puce électronique 106 commande la fermeture de l'interrupteur 112 (étape F214) de sorte à activer la première puce électronique 102 et l'interface de communications 104.

La première puce électronique 102 met ensuite en œuvre la transaction dans une étape F216, en communiquant avec un terminal externe T via l'interface de communications 104. Cette transaction est effectuée selon un ensemble de critères de sécurité, par exemple de type CRM (acronyme de la terminologie anglo-saxonne « Card Risk Management »), gérées par la première puce électronique 102, comprenant par exemple la vérification que le montant maximum de la transaction défini par la banque de l'utilisateur n'est pas dépassé.

Un inconvénient de l'architecture de la carte 100 est que l'authentification de l'utilisateur ne peut être mise en œuvre selon de telles règles de sécurité. En effet, la première puce électronique 102, qui gère ces règles de sécurité, est activée qu'une fois que l'utilisateur est authentifié.

Cependant, certaines situations de transaction nécessiteraient que l'authentification de l'utilisateur soit mise en œuvre selon ces règles de sécurité.

### Exposé de l'invention

A cet effet, la présente invention concerne un procédé d'authentification d'un utilisateur d'un dispositif électronique au moyen d'une donnée biométrique, mis en œuvre par ledit dispositif électronique, ledit dispositif électronique comprenant une première puce électronique apte à effectuer une transaction sécurisée,
ledit procédé comprenant les étapes suivantes :
- obtention de la donnée biométrique,
- réception d'une commande d'initialisation d'une transaction sécurisée, envoyée par un terminal de transaction, l'étape d'obtention débutant avant l'étape de réception de la commande d'initialisation, puis
- authentification de l'utilisateur au moyen de la donnée biométrique obtenue,
dans lequel l'étape d'authentification de l'utilisateur est mise en œuvre par la première puce électronique, une authentification réussie de l'utilisateur permettant d'autoriser la transaction sécurisée.

L'obtention de la donnée biométrique avant l'initialisation de la transaction permet à la donnée biométrique de sécuriser la transaction même lorsque le dispositif électronique n'est plus accessible pendant la transaction. Par exemple, lorsque le dispositif est une carte à puce avec contact, elle est insérée dans un lecteur de carte, ce qui rend l'accès à la carte compliqué.

En outre, l'authentification de l'utilisateur par la première puce électronique permet d'utiliser la donnée biométrique dans le cadre de la CRM (pour « Card Risk Management »), i.e. dans le cadre d'un ensemble de critères de sécurité gérés par la première puce électronique, et ainsi permet de sécuriser d'avantage la transaction.

Dans un mode de réalisation particulier, l'étape d'authentification de l'utilisateur comprend une comparaison de la donnée biométrique obtenue avec une donnée biométrique de référence, stockée dans la première puce électronique, une correspondance entre la donnée biométrique obtenue et la donnée biométrique de référence étant une condition de réussite de l'authentification de l'utilisateur.

Dans un mode de réalisation particulier, l'étape d'authentification comprend une sous étape de vérification d'une règle de sécurité,
dans laquelle une durée depuis obtention, correspondant à la durée écoulée depuis la mise en œuvre de l'étape d'obtention de la donnée biométrique, est déterminée, puis comparée à une durée de sécurité,
l'infériorité de la durée depuis obtention à la durée de sécurité étant une condition de réussite de l'authentification de l'utilisateur.

La mise en œuvre de cette sous étape de vérification permet de réduire le risque de fraude, et permet ainsi d'améliorer la sécurité de la transaction. En effet, plus la durée depuis obtention est courte, moins le risque de fraude est élevé. En effet, lorsque la durée depuis obtention est élevée, cela peut être le signe de l'occurrence d'un événement anormal, tel que le vol du dispositif électronique entre l'étape d'obtention et l'étape d'authentification.

Dans un mode de réalisation particulier, la valeur de la durée de sécurité est diminuée lorsque l'authentification de l'utilisateur échoue.

Dans un mode de réalisation particulier, le procédé comprend en outre une étape de transmission, par une deuxième puce électronique du dispositif électronique à la première puce électronique, de la donnée biométrique obtenue.

Dans un mode de réalisation particulier, ladite donnée biométrique obtenue transmise par la deuxième puce électronique comprend un horodatage, la durée depuis obtention étant déterminée à partir dudit horodatage.

Dans un mode de réalisation particulier, la durée depuis obtention est transmise par la deuxième puce électronique à la première puce électronique, suite à la réception, par la deuxième puce électronique, d'une requête de transmission envoyée par la première puce électronique.

Dans un mode de réalisation particulier, le procédé comprend en outre, avant l'étape de transmission, une étape de stockage de la donnée biométrique obtenue, dans une mémoire de la deuxième puce électronique du dispositif électronique, la donnée biométrique obtenue étant supprimée à la fin d'une durée de stockage.

Le traitement de la donnée biométrique est optimisé grâce à l'utilisation de la puissance de calcul de la deuxième puce électronique, la suppression de la donnée biométrique à la fin de la durée de stockage permettant d'augmenter la sécurité de la transaction, en diminuant le risque de vol de la donnée biométrique.

Dans un mode de réalisation particulier, le procédé comprend en outre une étape de stockage de la donnée biométrique obtenue, dans une mémoire de la première puce électronique, la donnée biométrique obtenue étant supprimée à la fin d'une durée de stockage.

Dans un mode de réalisation particulier, la comparaison de la donnée biométrique obtenue avec une donnée biométrique de référence comprend un calcul d'un degré de similitude entre la donnée biométrique obtenue et la donnée biométrique de référence, puis une comparaison du degré de similitude avec un seuil de similitude donné, la donnée biométrique obtenue correspondant à la donnée biométrique de référence lorsque le degré de similitude est supérieur au seuil de similitude, le seuil de similitude augmentant avec la durée de stockage et / ou la durée depuis obtention.

Dans un mode de réalisation particulier, l'étape d'obtention comprend une sous étape d'acquisition d'une empreinte biométrique, et la sous étape suivante, mise en œuvre par un capteur d'activation du dispositif électronique, avant la sous étape d'acquisition de l'empreinte biométrique :
- activation de la deuxième puce électronique, suite à la détection d'une commande d'activation,
la deuxième puce électronique commandant alors un lecteur d'empreintes biométriques afin de mettre en œuvre la sous étape d'acquisition.

Dans un mode de réalisation particulier, l'étape d'obtention comprend une sous étape d'acquisition d'une empreinte biométrique, et la sous étape suivante, mise en œuvre par un capteur d'activation du dispositif électronique, avant la sous étape d'acquisition de l'empreinte biométrique :
- activation de la première puce électronique, suite à la détection d'une commande d'activation,
la première puce électronique commandant alors un lecteur d'empreintes biométriques afin de mettre en œuvre la sous étape d'acquisition.

La sécurité de la transaction est encore augmentée, car l'acquisition de l'empreinte biométrique ne peut être effectuée qu'après une action d'activation effectuée par l'utilisateur du dispositif électronique. L'utilisateur garde ainsi le contrôle sur l'acquisition de l'empreinte biométrique.

Dans un mode de réalisation particulier, l'étape d'authentification comprend une sous étape de vérification que le nombre de mises en œuvre de l'étape d'obtention de la donnée biométrique entre la fin d'une transaction sécurisée précédant ladite transaction sécurisée et la fin de ladite transaction sécurisée est inférieur à un seuil donné de mises en œuvre,
l'infériorité du nombre de mises en œuvre de l'étape d'obtention au seuil donné de mises en œuvre étant une condition de réussite de l'authentification de l'utilisateur.

La sous étape de vérification permet d'améliorer la sécurité de la transaction, le nombre de tentative d'obtention de la donnée biométrique pour la transaction étant limité. En outre, la sous étape de vérification peut permettre d'économiser la batterie.

Dans un mode de réalisation particulier, la première puce électronique requiert un code de sécurité dans le cas où l'authentification de l'utilisateur échoue, un code de sécurité valide permettant d'autoriser ladite transaction sécurisée ou une transaction sécurisée suivant ladite transaction sécurisée.

Le code de sécurité augmente encore la sécurité de la transaction.

L'invention concerne en outre un dispositif électronique, apte à mettre en œuvre un procédé tel que décrit ci-dessus.

Dans un mode particulier de réalisation, les différentes étapes du procédé tel que décrit ci-dessus sont déterminées par des instructions de programmes d'ordinateur.

En conséquence, l'invention vise aussi un programme d'ordinateur sur un support d'informations (ou support d'enregistrement), ce programme étant susceptible d'être mis en œuvre par un dispositif électronique ou plus généralement dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme particulièrement compilée, ou dans n'importe quelle autre forme souhaitable.

L'invention vise aussi un support d'information (ou support d'enregistrement) lisible par un dispositif électronique ou plus généralement par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible (de type « EEPROM » ou « Flash NAND » par exemple), ou tel qu'une « ROM », par exemple un « CD ROM » ou une « ROM » de circuit microélectronique, ou encore un moyen d'enregistrement magnétique, par exemple une disquette (« floppy disc ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 représente, de manière schématique, une carte à puce selon l'art antérieur ;
[Fig. 2] La figure 2 représente, sous forme d'un organigramme, les étapes d'un procédé d'authentification selon l'art antérieur ;
[Fig. 3] La figure 3 représente, de manière schématique, un dispositif électronique conforme à un exemple de mode de réalisation de l'invention ;
[Fig. 4] La figure 4 représente, sous forme d'organigramme, les principales étapes d'un procédé d'authentification conforme à un exemple de mode de réalisation de l'invention ;
[Fig. 5] La figure 5 représente, sous forme d'organigramme, les principales étapes d'un procédé d'authentification conforme à un exemple de mode de réalisation de l'invention.

### Description des modes de réalisation

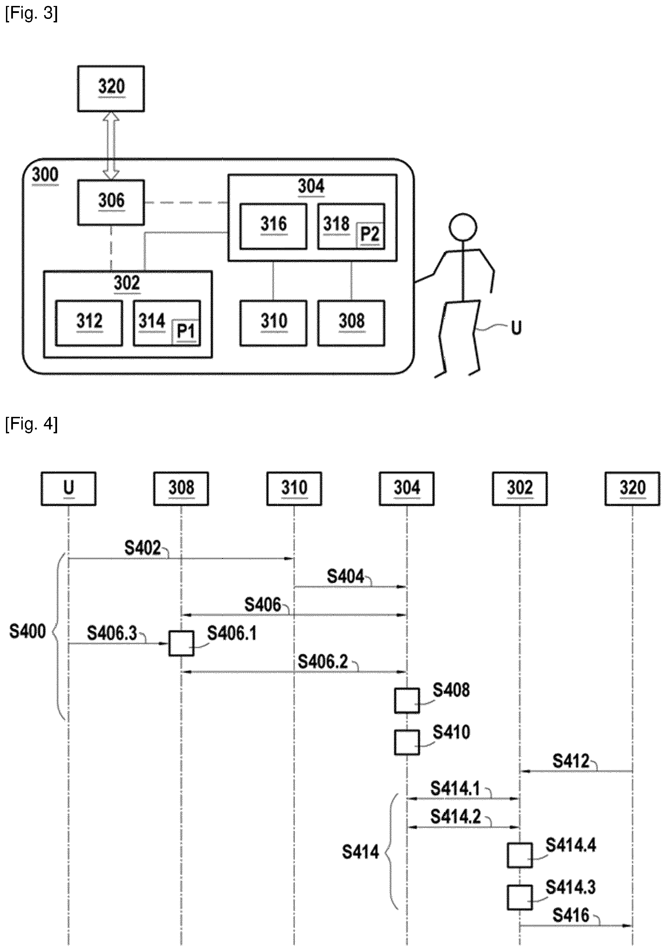

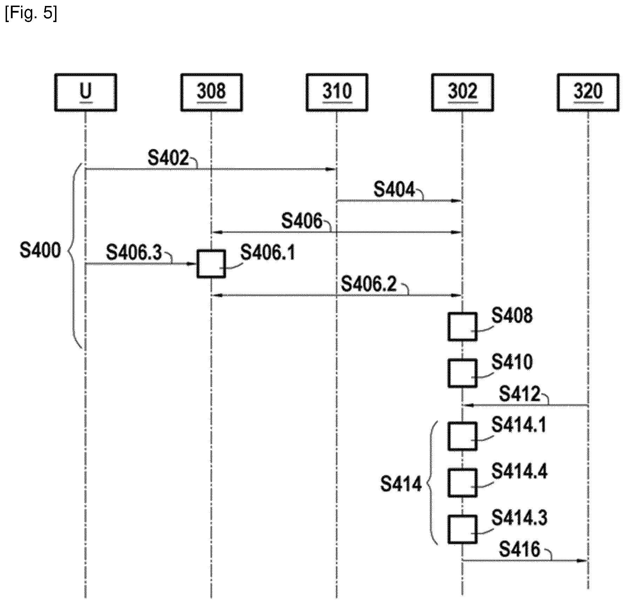

La **figure 3** représente, de manière schématique, un dispositif électronique 300 conforme à un exemple de mode de réalisation de l'invention, apte à mettre en œuvre un procédé d'authentification d'un utilisateur U du dispositif électronique 300, conforme à un exemple de mode de réalisation, par exemple le procédé décrit en référence à la figure 4 ou à la figure 5.

Comme décrit ci-après, l'authentification de l'utilisateur U du dispositif électronique 300 permet d'autoriser ou de rejeter une transaction sécurisée, mise en œuvre au moyen du dispositif électronique 300, coopérant avec un terminal externe de transaction 320.

La transaction sécurisée est typiquement une transaction bancaire (i.e. une transaction de paiement, un prélèvement, etc.), ou un contrôle d'accès.

Le dispositif électronique 300 est typiquement une carte à puce, par exemple une carte bancaire (ou carte de paiement) de format ID-1 spécifiée dans la norme ISO / IEC 7810, présentant les dimensions 85,6 millimètres par 53,98 millimètres par 0,76 millimètres.

La carte à puce 300 peut en outre être une carte à puce avec contacts dont les caractéristiques sont détaillées dans la norme ISO / IEC 7816, ou une carte à puce sans contact dont les caractéristiques sont détaillées dans la norme ISO / IEC 14443 ou NFC / ISO 15693.

De plus, la carte à puce 300 peut fonctionner selon le protocole EMV (pour « Europay Mastercard Visa », en terminologie anglo-saxonne).

En variante, le dispositif électronique peut être toute carte (une carte de transport, une carte d'accès, une carte d'assurance maladie, une carte d'identité, une carte de vote, une carte de permis de conduire, etc.) configurée pour stocker des données sensibles (par exemple des données d'identité, des données bancaires) et pour réaliser des transactions impliquant de telles données (e.g. une transaction pour effectuer un vote électronique, une transaction permettant l'accès à des données d'identité du dispositif électronique, une transaction pour obtenir un accès physique ou logique, etc.).

Le dispositif électronique 300 comprend une première puce électronique 302, une deuxième puce électronique 304, une interface de communications 306, et peut comprendre un lecteur d'empreintes biométriques 308 et / ou un capteur 310 d'activation. Le dispositif électronique 300 peut en outre comprendre une batterie (non représentée) et / ou une horloge temps réel.

La deuxième puce électronique 304 est connectée électriquement, directement ou indirectement à la première puce électronique 302, au lecteur d'empreintes biométriques 308 et au capteur 310 d'activation.

La communication entre la première puce électronique 302 et la deuxième puce électronique 304 peut être mise en œuvre via un canal de communication sécurisé.

En outre, l'interface de communications 306 est connectée électriquement, directement ou indirectement, à la première puce électronique 302 et / ou la deuxième puce électronique 304.

La première puce électronique 302 est notamment apte à mettre en œuvre la transaction sécurisée, typiquement selon le protocole EMV, en communiquant avec le terminal de transaction 320 via l'interface de communications 306.

La première puce électronique 302 comprend un premier processeur 312 et une première mémoire 314 non-volatile.

La première mémoire 314 est une mémoire non-volatile réinscriptible, cette première mémoire 314 constituant un support d'enregistrement (ou support d'informations) conforme à un mode de réalisation particulier, lisible par le premier processeur 312, et sur lequel est enregistré un premier programme d'ordinateur P1 conforme à un mode de réalisation particulier.

Une donnée biométrique de référence peut en outre être stockée dans la première mémoire 314. En variante, le premier programme P1 est enregistré dans une mémoire morte (ROM) (non représentée) de la première puce électronique 302.

La deuxième puce électronique 304 est notamment apte à mettre en œuvre une obtention d'une donnée biométrique, en coopérant avec le lecteur d'empreintes biométriques 308 et le capteur 310, et éventuellement avec la première puce électronique 302.

La deuxième puce électronique 304 comprend un deuxième processeur 316 et une deuxième mémoire 318 non-volatile et peut en outre comprendre une horloge temps réel et / ou une mémoire volatile (non représentés).

La deuxième mémoire 318 est une mémoire non-volatile réinscriptible, cette deuxième mémoire 318 constituant un support d'enregistrement (ou support d'informations) conforme à un mode de réalisation particulier, lisible par le deuxième processeur 316, et sur lequel est enregistré un deuxième programme d'ordinateur P2 conforme à un mode de réalisation particulier. En variante, le deuxième programme P2 est enregistré dans une mémoire morte (ROM) (non représentée) de la deuxième puce électronique 304.

Le premier programme d'ordinateur P1 et le deuxième programme d'ordinateur P2 comportent ainsi collectivement des instructions pour l'exécution des étapes d'un procédé d'authentification selon un mode de réalisation particulier, typiquement le procédé décrit en référence à la figure 4.

La batterie du dispositif électronique 300 est typiquement un supercondensateur ou une batterie rechargeable.

L'interface de communications 306 permet au dispositif électronique 300 de communiquer avec une entité externe, tel que le terminal de transaction 320. La communication peut être une communication sans contact, l'interface de communication 306 comprenant alors une antenne radiofréquence, ou une communication par contact, l'interface de communication 306 comprenant alors des plages de contacts positionnés sur la surface externe du dispositif électronique 300.

Dans l'exemple où le dispositif électronique 300 est une carte à puce, le terminal de transaction 320 peut être un lecteur de carte, apte à communiquer avec la carte et pouvant être apte à communiquer avec un serveur distant.

Dans un exemple, les empreintes biométriques acquises au moyen du lecteur d'empreintes biométriques 308 sont des empreintes digitales, le lecteur d'empreintes biométriques 308 étant ainsi un lecteur d'empreintes digitales. En variante, les empreintes biométriques acquises au moyen du lecteur d'empreintes biométriques 308 peuvent être tout type d'empreinte biométrique, par exemple des empreintes d'iris, des empreintes de voix, etc. Les empreintes biométriques peuvent ainsi être des images ou des empreintes sonores.

Le capteur 310 d'activation est typiquement un capteur de pression tel qu'un bouton, un capteur de luminosité, ou encore un accéléromètre, ou encore un capteur capacitif. Le lecteur d'empreintes biométriques 308 peut alors comprendre ou être le capteur 310.

Le capteur 310 peut aussi être une antenne, l'interface de communications 306 pouvant alors comprendre ou être le capteur 310.

En variante, le dispositif électronique 300 ne comprend pas de deuxième puce électronique 304. La première puce électronique 302 est alors apte à mettre en œuvre l'obtention d'une donnée biométrique, en coopérant avec le lecteur d'empreintes biométriques 308 et le capteur 310. De plus, le premier programme d'ordinateur P1 comporte les instructions pour l'exécution des étapes d'un procédé d'authentification selon un autre mode de réalisation particulier, typiquement le procédé décrit en référence à la figure 5.

Selon une autre variante, le lecteur d'empreintes biométriques 308 et / ou le capteur 310 ne sont pas compris dans le dispositif électronique 300 mais sont extérieurs au dispositif électronique 300. La première puce électronique 302 et / ou la deuxième puce électronique 304 sont alors apte à mettre en œuvre l'obtention d'une donnée biométrique, en coopérant avec le lecteur d'empreintes biométriques 308 et le capteur 310 par l'intermédiaire de l'interface de communication 306. Dans cette variante, le lecteur d'empreintes biométriques 308 et le capteur 310 sont par exemple positionnés sur un étui de carte à puce, l'étui comprenant en outre une interface de communication apte à coopérer avec l'interface de communication 306. Dans le cadre d'une transaction, une fois la donnée biométrique obtenue, l'utilisateur peut sortir la carte de son étui puis insérer la carte dans un lecteur pour réaliser la transaction.

Selon une autre variante, la deuxième puce électronique 304 est extérieure au dispositif électronique 300. La première puce électronique 302 coopère alors avec la deuxième puce électronique par l'intermédiaire de l'interface de communication 306.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

Les figures 4 et 5 représentent des procédés d'authentification conformes à des exemples de modes de réalisation de l'invention.

La **figure 4** représente un procédé d'authentification d'un utilisateur d'un dispositif électronique 300 au moyen d'une donnée biométrique, mis en œuvre par le dispositif électronique 300 de la figure 3, lorsque ce dispositif électronique 300 comprend la première puce électronique 302 et la deuxième puce électronique 304.

Dans une étape S400, une donnée biométrique, représentative de l'utilisateur U, est obtenue.

L'étape S400 peut comporter une sous étape S402, dans laquelle le capteur 310 détecte une commande d'activation.

Dans l'exemple où le capteur 310 est un capteur de pression, la commande d'activation peut être une pression de l'utilisateur U du dispositif électronique 300 sur le capteur 310.

Dans l'exemple où le capteur 310 est une antenne, la commande d'activation peut être une émission d'un champ magnétique par un terminal distant, typiquement le terminal de transaction 320.

Le capteur 310 peut ensuite activer, dans une sous étape S404 de l'étape S400, la deuxième puce électronique 304. Plus précisément, le capteur 310 active l'alimentation par batterie de la deuxième puce électronique 304, de sorte que la batterie puisse fournir l'énergie nécessaire à la mise en œuvre de la sous étape d'acquisition S406 décrite ci-après et éventuellement la mise en œuvre de la sous étape S408 de traitement d'image, l'étape S410 de stockage et / ou la sous étape S414.2 de transmission, et / ou de l'étape d'authentification S414, décrites ci-après. Il n'est ainsi pas nécessaire, pour mettre en œuvre ces étapes, d'alimenter le dispositif 300 via un dispositif externe tel que le terminal de transaction 320.

La batterie est typiquement désactivée à la fin d'une durée de stockage ou d'une durée maximale de stockage décrites ci-après.

Suite à l'activation de la deuxième puce électronique 304, la deuxième puce électronique 304 peut commander le lecteur d'empreintes biométriques 308 afin de mettre en œuvre une sous étape S406 d'acquisition d'une empreinte biométrique. Dans cette sous étape S406 d'acquisition, le lecteur d'empreintes biométriques 308 peut acquérir S406.1 l'empreinte biométrique, puis transmettre S406.2 cette empreinte à la deuxième puce électronique 304.

Dans l'exemple où l'empreinte biométrique est une empreinte digitale, l'utilisateur positionne S406.3 son doigt sur le lecteur d'empreintes biométriques 308, et le lecteur d'empreintes biométriques 308 peut alors acquérir l'empreinte de ce doigt.

La deuxième puce électronique 304 peut mettre en œuvre un traitement d'image sur l'empreinte biométrique, afin d'obtenir la donnée biométrique (sous étape S408). En variante, la donnée biométrique est l'empreinte obtenue par le lecteur d'empreintes biométrique 308.

La donnée biométrique obtenue peut ensuite être stockée dans la deuxième mémoire 318 de la deuxième puce électronique 304 (étape S410), typiquement pendant la durée de stockage. A la fin de cette durée de stockage, la donnée biométrique obtenue est supprimée de la deuxième mémoire 318.

Comme décrit ensuite, la durée de stockage ne peut dépasser une durée maximale de stockage, cette durée maximale de stockage étant typiquement d'une ou plusieurs secondes, ou une ou plusieurs minutes. La durée maximale de stockage est par exemple comprise entre 1 seconde et 5 minutes.

La durée maximale de stockage peut dépendre d'une règle de sécurité de la transaction sécurisée, d'un nombre de mises en œuvre du procédé, ou d'un paramètre de la première puce électronique 302. Le paramètre est typiquement une valeur de référence de durée de stockage maximale configurée et mémorisée dans la première puce électronique 302. Une telle configuration peut être réalisée par l'entité émettrice du dispositif électronique 300, par exemple la banque, avant la remise dudit dispositif à son utilisateur U. Cette valeur peut être transmise automatiquement ou sur requête de la deuxième puce électronique 304, par la première puce électronique 302 à la deuxième puce électronique 304.

Grâce à ce mécanisme, la sécurité de la transaction est augmentée. En effet, la donnée biométrique étant supprimée à la fin de la durée de stockage, elle ne peut être utilisée que pendant cette durée de stockage.

En variante, la donnée biométrique obtenue est stockée dans la mémoire volatile de la deuxième puce électronique 304, pendant la durée de stockage. A la fin de la durée de stockage, la batterie est désactivée, de sorte que cette batterie cesse d'alimenter la mémoire volatile, ce qui efface la donnée biométrique obtenue de la mémoire volatile.

Dans une variante, l'étape S410 de stockage de la donnée biométrique dans la deuxième puce électronique 304 n'est pas mise en œuvre, et la deuxième puce électronique 304 transfère la donnée biométrique obtenue à la première puce électronique 302, typiquement après avoir horodaté de manière sécurisée la donnée biométrique obtenue.

La première puce électronique 302 stocke alors cette donnée biométrique obtenue dans la première mémoire 314 de la première puce électronique 302, typiquement pendant la durée de stockage.

A la fin de cette durée de stockage, la donnée biométrique obtenue est supprimée de la première mémoire 314.

Comme décrit ci-avant, la durée de stockage ne peut dépasser une durée maximale de stockage, cette durée maximale de stockage étant typiquement d'une ou plusieurs secondes, ou une ou plusieurs minutes. La durée maximale de stockage est par exemple comprise entre 1 seconde et 5 minutes.

La durée maximale de stockage peut dépendre d'une règle de sécurité de la transaction sécurisée, d'un nombre de mises en œuvre du procédé, ou d'un paramètre de la première puce électronique 302. Le paramètre est typiquement une valeur de référence de durée de stockage maximale configurée et mémorisée dans la première puce électronique 302. Une telle configuration peut être réalisée par l'entité émettrice du dispositif électronique 300, par exemple la banque, avant la remise dudit dispositif à son utilisateur U.

Grâce à ce mécanisme, la sécurité de la transaction est augmentée. En effet, la donnée biométrique étant supprimée à la fin de la durée de stockage, elle ne peut être utilisée que pendant cette durée de stockage.

Dans cette variante, le stockage de la donnée biométrique obtenue par la première puce électronique 302 permet de sécuriser d'avantage la transaction, la première puce électronique 302 étant sécurisée.

La première puce électronique 302 du dispositif électronique 300 reçoit une commande d'initialisation d'une transaction sécurisée (étape S412) via l'interface de communication 306, cette commande ayant été envoyée par le terminal de transaction 320.

La commande d'initialisation est reçue après le début de la mise en œuvre de l'étape S400 d'obtention de la donnée biométrique.

Lorsque le dispositif électronique 300 est une carte à puce avec contacts, l'étape S412 peut faire suite à une insertion de la carte à puce 300 dans le terminal de transaction 320 par l'utilisateur U. Les sous étapes S402, S404 et S406 de l'étape d'obtention sont alors typiquement mises en œuvre avant la réception de la commande d'initialisation, la commande d'initialisation pouvant être reçue avant ou après l'étape S410, et avant ou après la sous étape S408.

Lorsque le dispositif électronique 300 est une carte à puce sans contact, l'étape S412 peut faire suite à une présentation de la carte à puce 300 à proximité du terminal de transaction 320, par l'utilisateur U. La sous étape S402 de l'étape S400 d'obtention est alors typiquement mise en œuvre avant la réception de la commande d'initialisation. La commande d'initialisation peut ainsi être reçue à tout moment après la mise en œuvre de la sous étape S402.

Dans une étape S414, la première puce électronique 302 authentifie l'utilisateur U du dispositif électronique 300 au moyen de la donnée biométrique obtenue, de sorte à autoriser ou rejeter la transaction sécurisée. Cette étape S414 est typiquement mise en œuvre suite à la réception de la commande d'initialisation. En variante, au moins une partie de cette étape S414 est mise en œuvre après réception de la commande d'initialisation.

Le dispositif électronique 300 autorise la transaction sécurisée en envoyant au terminal de transaction 320 un message indiquant un accord du dispositif électronique 300. La transaction est ensuite réalisée si le terminal de transaction 320 autorise la transaction.

Le dispositif électronique 300 rejette la transaction sécurisée en envoyant au terminal de transaction 320 un message indiquant un désaccord du dispositif électronique 300. En général, la transaction n'est alors pas autorisée (elle est rejetée) par le terminal de transaction 320. Dans certaines situations, la transaction est quand même validée par le terminal de transaction 320, même si le dispositif électronique 300 rejette la transaction.

L'étape d'authentification S414 peut comprendre une sous étape S414.1 de vérification d'une règle de sécurité dans laquelle une durée depuis obtention est déterminée, la durée depuis obtention correspondant à la durée écoulée depuis la mise en œuvre de l'étape S400 d'obtention de la donnée biométrique. Plus précisément, la durée depuis obtention peut correspondre à la durée écoulée depuis la mise en œuvre d'une des sous étapes S402, S404 et / ou S406 de l'étape S400, par exemple la sous étape S406 d'acquisition de l'empreinte biométrique.

La durée depuis obtention est typiquement déterminée au moyen de l'horloge temps réel de la deuxième puce électronique 304 et / ou du dispositif électronique 300, puis envoyée par la deuxième puce électronique 304 à la première puce électronique 302. Cet envoi fait typiquement suite à la réception, par la deuxième puce électronique 304, d'une requête de transmission envoyée par la première puce électronique 302, cette requête de transmission faisant suite à la détection d'un événement par la première puce électronique 302, tel que la réception de la commande d'initialisation.

Comme indiqué ci-dessus, la communication entre la première puce électronique 302 et la deuxième puce électronique 304 peut être mise en œuvre via un canal de communication sécurisé. Le canal de communication sécurisé est typiquement créé après une authentification de la deuxième puce électronique 304 par la première puce électronique 302, une authentification de la première puce électronique 302 par la deuxième puce électronique 304, ou une double authentification entre la première puce électronique 302 et la deuxième puce électronique 304.

En outre, la durée depuis obtention peut être chiffrée et / ou signée par la deuxième puce électronique 304, avant transmission de cette durée depuis obtention à la première puce électronique 302, afin de d'assurer que la durée depuis obtention ne puisse être récupérée lors de la transmission par un tiers, et / ou ne puisse être modifiée ou substituée lors de cette transmission.

La durée depuis obtention est typiquement égale ou comprend typiquement la durée écoulée entre la mise en œuvre de l'étape S400 d'obtention et la réception de la requête de transmission susmentionnée (typiquement entre la mise en œuvre de la sous étape S406 de l'étape S400 et la réception de la requête de transmission susmentionnée).

En variante, la première puce électronique 302 détermine la durée depuis obtention, typiquement à partir de l'horodatage de la donnée biométrique obtenue.

Dans la variante où l'étape S410 de stockage n'est pas mise en œuvre et la première puce électronique 302 stocke la donnée biométrique obtenue, la durée depuis obtention peut être égale ou comprendre la durée écoulée entre la mise en œuvre de l'étape S400 d'obtention et la mise en œuvre de la sous étape S414.1 de vérification d'une règle de sécurité. La durée depuis obtention est typiquement déterminée au moyen de l'horloge temps réel du dispositif électronique 300 et / ou de l'horodatage de la donnée biométrique obtenue.

Après la détermination de la durée depuis obtention, la sous étape S414.1 peut comprendre une comparaison, par la première puce électronique 302, de la durée depuis obtention à une durée de sécurité.

La durée de sécurité est inférieure à la durée maximale de stockage, et est typiquement d'une ou plusieurs dizaines de secondes, par exemple 10, 20 ou 40 secondes.

Si la durée depuis obtention est inférieure à la durée de sécurité, la règle de sécurité est vérifiée. En revanche, si la durée depuis obtention est supérieure à la durée de sécurité, la règle de sécurité n'est pas vérifiée.

La mise en œuvre de la sous étape S414.1 peut dépendre typiquement d'un ou plusieurs critères de sécurité portant sur un ou plusieurs paramètres de transaction, typiquement des critères de sécurité de type CRM (acronyme de la terminologie anglo-saxonne « Card Risk Management »), lorsque la transaction sécurisée est une transaction bancaire, tel que des critères portant sur le montant de la transaction, où le pays dans lequel la transaction est mise en œuvre.

Par exemple, lorsque la transaction sécurisée est une transaction bancaire, la sous étape S414.1 est mise en œuvre lorsque le montant de la transaction est supérieur à un seuil donné, typiquement égal à une ou plusieurs dizaines ou centaines d'euros, par exemple 100 euros, et n'est pas mise en œuvre sinon.

En outre, plusieurs durées de sécurité peuvent être définies, chaque durée correspondant à un ou plusieurs critères de sécurité différents. La durée de sécurité utilisée pour la comparaison peut être ainsi sélectionnée en fonction d'un ou plusieurs critères de sécurité.

Par exemple, lorsque la transaction sécurisée est une transaction bancaire, la sous étape S414.1 peut être mise en œuvre en comparant la durée depuis obtention à une première durée de sécurité si le montant de la transaction est inférieur à un premier seuil donné, ou être mise en œuvre en comparant la durée depuis obtention à une deuxième durée de sécurité, si le montant de la transaction est supérieur à ce premier seuil donné, la première durée de sécurité étant supérieure à la deuxième durée de sécurité. Ainsi, plus le montant de la transaction est élevé, plus la durée de sécurité est courte.

Dans un autre exemple où la transaction sécurisée est un contrôle d'accès, chaque paramètre de transaction peut être un niveau de sécurité d'une information, d'un système d'information, d'un lieu auquel on veut accéder (typiquement un local ou un bâtiment), ou d'un équipement auquel on veut accéder. Plus le niveau de sécurité est élevé, plus la durée de sécurité est courte.

La sous étape S414.1 de vérification d'une règle de sécurité est typiquement mise en œuvre après l'étape S412 de réception de la commande d'initialisation.

La mise en œuvre de cette sous étape S414.1 permet de réduire le risque de fraude, et permet ainsi d'améliorer la sécurité de la transaction. En effet, plus la durée depuis obtention est courte, moins le risque de fraude est élevé. En effet, lorsque la durée depuis obtention est élevée, cela peut être le signe de l'occurrence d'un événement anormal, tel que le vol du dispositif électronique 300 entre l'étape S400 d'obtention et l'étape S414 d'authentification.

L'étape d'authentification S414 peut comprendre une sous étape S414.2, dans laquelle la deuxième puce électronique 304 transmet à la première puce électronique 302 la donnée biométrique obtenue, typiquement via le canal de communication sécurisé.

La deuxième puce électronique 304 peut transmettre la donnée biométrique obtenue et la durée depuis obtention au même moment. En variante, la donnée biométrique obtenue peut être horodatée, typiquement de manière sécurisée.

La donnée biométrique obtenue peut être chiffrée et / ou signée par la deuxième puce électronique 304, avant transmission de cette donnée biométrique obtenue à la première puce électronique 302, afin de d'assurer que la donnée biométrique obtenue ne puisse être récupérée lors de la transmission par un tiers, et / ou ne puisse être modifiée ou substituée lors de cette transmission.

Suite à la transmission de la donnée biométrique obtenue, la deuxième puce électronique 304 supprime cette donnée biométrique obtenue de sa mémoire 318 ou de sa mémoire volatile.

Ainsi, la durée de stockage correspond à la durée écoulée entre l'étape S400 d'obtention et la sous étape S414.2 de transmission de la donnée biométrique, si cette durée écoulée est inférieure à la durée maximale de stockage.

Dans le cas contraire où la durée écoulée est supérieure à la durée maximale de stockage, la durée de stockage correspond à la durée maximale de stockage, et la sous étape S414.2 ne devrait pas être mise en œuvre, la donnée biométrique devant être supprimée à la fin de la durée de stockage. La sous étape S414.3 de comparaison, décrite ci-après, n'est alors pas mise en œuvre, et l'utilisateur U du dispositif électronique 300 n'est pas authentifié.

Si la deuxième puce électronique 304 transmet à la première puce électronique 302 la donnée biométrique obtenue, alors que la durée écoulée est supérieure à la durée maximale de stockage, la première puce électronique 302 détermine la présence d'un dysfonctionnement ou d'une faille de sécurité du dispositif électronique 300. En effet, dans une telle situation, la donnée biométrique aurait dû être supprimée de la deuxième puce électronique 304, et n'aurait ainsi pas dû être envoyée.

La première puce électronique 302 met alors en œuvre une action de sécurité, par exemple en bloquant toute transaction, en effaçant la donnée biométrique de référence, et / ou en demandant un code de sécurité tel qu'un code PIN (pour « Personal Identification Number », en terminologie anglo-saxonne) à la transaction suivante ou en cours.

Dans la variante dans laquelle l'étape S410 n'est pas mise en œuvre et la première puce électronique 302 stocke la donnée biométrique obtenue, la deuxième puce électronique S304 transfère la donnée biométrique obtenue à la première puce électronique 302 de sorte que la première puce électronique stocke cette donnée biométrique. La première puce électronique 302 vérifie que l'obtention de la donnée biométrique a été mise en œuvre, et que la donnée biométrique est disponible, typiquement après l'étape S412 de réception de la commande d'initialisation.

De plus, dans cette variante, la durée de stockage correspond à la durée écoulée entre l'étape S400 d'obtention et la sous étape S414.3 de comparaison de l'étape S414 d'authentification (décrite ci-dessous), si cette durée est inférieure à la durée maximale de stockage, ou à la durée maximale de stockage dans le cas contraire. La première puce électronique 302 supprime la donnée biométrique à la fin de la durée de stockage.

L'étape d'authentification S414 comprend en outre, dans le cas où la première puce reçoit la donnée biométrique obtenue, une sous étape S414.3 de comparaison de la donnée biométrique obtenue avec la donnée biométrique de référence, stockée dans la première mémoire 314 de la première puce électronique 302.

La sous étape S414.3 de comparaison comprend typiquement un calcul d'un degré de similitude entre la donnée biométrique obtenue et la donnée biométrique de référence, puis une comparaison du degré de similitude avec un seuil de similitude donné. Si le degré de similitude est supérieur au seuil de similitude, la donnée biométrique obtenue correspond à la donnée biométrique de référence. Si le degré de similitude est inférieur au seuil de similitude, la donnée biométrique obtenue ne correspond pas à la donnée biométrique de référence. Le seuil de similitude peut être déterminé en fonction de la durée de stockage et / ou de la durée depuis obtention. Par exemple, plus la durée de stockage est longue, plus le seuil de similitude est élevé. Selon un autre exemple, plus la durée depuis obtention est longue, plus le seuil de similitude est élevé.

L'étape d'authentification S414 peut comprendre en outre, par exemple avant la sous étape S414.3 de comparaison, une sous étape S414.4 de vérification que le nombre de mise en œuvre de l'étape d'obtention S400, ou de l'une de ses sous étapes (par exemple la sous étape S406 d'acquisition d'une empreinte biométrique), entre la fin d'une précédente transaction et la fin de la présente transaction, est inférieur à un seuil donné de mises en œuvre.

Cette sous étape S414.4 est typiquement mise en œuvre au moyen d'un compteur, le compteur étant incrémenté à chaque mise en œuvre de l'étape S400 d'obtention, et étant réinitialisé lorsque la donnée biométrique obtenue correspond à la donnée biométrique de référence, lors d'une mise en œuvre de la sous étape S414.3. En variante, le compteur peut être réinitialisé après une vérification réussie d'un code de sécurité tel qu'un code PIN et / ou une communication en contact quand la communication par l'interface de communication 306 peut être une communication en contact ou sans contact.

Dans le cas où le nombre de mise en œuvre de l'étape S400 d'obtention est supérieur ou égal au seuil donné de mises en œuvre, la sous étape S414.3 de comparaison n'est pas mise en œuvre, et l'authentification de l'utilisateur U échoue. Dans le cas où le nombre de mise en œuvre de l'étape S400 d'obtention est inférieur au seuil donné de mises en œuvre, la sous étape S414.3 de comparaison est mise en œuvre.

L'incrémentation et la remise à niveau du compteur peuvent être effectuées par la première puce électronique 302 et / ou la deuxième puce électronique 304.

Par exemple la réinitialisation suite à une correspondance à la sous étape S414.3 peut être effectuée par la deuxième puce électronique 304, la deuxième puce électronique 304 étant l'entité la plus à même de connaître l'évènement ayant déclenché la mise en œuvre de la sous étape S406 d'acquisition, l'évènement étant typiquement la commande d'activation de la sous étape S402, où pouvant être, comme décrit ci-dessous, la réception d'une commande d'initialisation d'une transaction sécurisée.

La réinitialisation après une vérification réussie d'un code de sécurité peut être effectuée par la première puce électronique 302, cette vérification étant mise en œuvre par la première puce 302 pour des raisons de sécurité.

Dans le cas où l'étape S412 est mise en œuvre avant ou pendant les sous étapes S406 et / ou S408, la sous étape S414.4 peut être réalisée avant la mise en œuvre des sous étapes S414.1, S414.2 et S414.3. Dans ce cas, la première puce électronique 302 attend que la deuxième puce électronique 304 lui transmette la donnée biométrique pour poursuivre la mise en œuvre du procédé, c'est-à-dire attend la mise en œuvre des sous étapes S414.1 et / ou S414.2 pour ensuite mettre en outre la sous étape S414.3.

La vérification du nombre d'obtention d'une donnée biométrique peut être appliquée plus largement à n'importe quel procédé d'authentification d'un utilisateur d'un dispositif électronique au moyen d'une donnée biométrique, ce procédé comprenant au moins une obtention d'une donnée biométrique et étant par exemple mis en œuvre par le dispositif électronique 300 de la figure 3. Plus précisément, cette vérification peut être appliquée à un procédé différant du procédé de la figure 4 en ce que la commande d'initialisation d'une transaction sécurisée est reçue par la première puce électronique 302 avant le début de l'obtention de la donnée biométrique. Dans ce cas, l'évènement déclenchant l'acquisition peut être la réception de la commande d'initialisation de la transaction sécurisée, la première puce électronique 302 activant, après réception de cette commande d'initialisation, la deuxième puce électronique 304, cette activation permettant à la deuxième puce électronique 302 de commander le lecteur d'empreintes biométriques 308 afin d'acquérir la donnée biométrique.

La sous étape S414.4 permet d'améliorer la sécurité de la transaction, le nombre de tentative d'obtention de la donnée biométrique pour la transaction étant limité. En outre, la sous étape S414.4 peut permettre d'économiser la batterie.

Dans le cas où la sous étape S414.3 de comparaison est mise en œuvre alors que la sous étape S414.1 n'est pas mise en œuvre, l'authentification de l'utilisateur est réussie si la donnée biométrique obtenue correspond à la donnée biométrique de référence, et échoue si la donnée biométrique obtenue ne correspond pas à la donnée biométrique de référence.

Dans le cas où les sous étapes S414.1 et S414.3 sont mises en œuvre, l'authentification de l'utilisateur est réussie si la donnée biométrique obtenue correspond à la donnée biométrique de référence et si la règle de sécurité est vérifiée, et échoue si la donnée biométrique obtenue ne correspond pas à la donnée biométrique de référence ou si la règle de sécurité n'est pas vérifiée.

Dans le cas où l'authentification de l'utilisateur est réussie, la première puce électronique 302 peut autoriser la transaction, et notifier le terminal de transaction 320 de cette autorisation, via l'interface de communications 306 (étape S416).

Dans le cas où l'authentification de l'utilisateur échoue, la première puce électronique 302 peut rejeter la transaction, et notifier le terminal de transaction 320 de ce rejet via l'interface de communications 306.

En variante, lorsque l'authentification de l'utilisateur échoue, la première puce électronique 302 peut requérir que l'utilisateur U entre sur une interface utilisateur, par exemple du dispositif électronique 300 ou du terminal 320, un code de sécurité tel qu'un code PIN, puis vérifier le code de sécurité. Si le code de sécurité est valide, la première puce électronique 302 peut autoriser la transaction et notifier le terminal de transaction 320 de cette autorisation, via l'interface de communications 306.

Si le code de sécurité est invalide, la première puce électronique 302 peut rejeter la transaction, et notifier le terminal de transaction 320 de ce rejet via l'interface de communications 306.

Lorsque l'authentification de l'utilisateur échoue, la durée de sécurité peut être diminuée et / ou la durée maximale de stockage peut être diminuée, afin de sécuriser d'avantage les transactions suivantes.

La **figure 5** représente un procédé d'authentification d'un utilisateur d'un dispositif électronique au moyen d'une donnée biométrique, mis en œuvre par le dispositif électronique 300 de la figure 3, lorsque ce dispositif électronique 300 ne comprend pas de deuxième puce électronique.

Par souci de simplicité les éléments de la figure 5 communs à ceux de la figure 4 ne sont pas décrits à nouveau. En outre, les éléments communs ou analogues des figures 4 et 5 portent les mêmes signes de référence.

Le procédé de la figure 5 diffère du procédé de la figure 4 en ce que la première puce électronique 302 peut mettre en œuvre non seulement les étapes S412, S414 et S416, mais aussi les sous étapes S406, S408 et l'étape S410 réalisées dans la figure 4 par la deuxième puce électronique 304. De plus, les étapes de transmission de données de la deuxième puce 304 à la première puce 302 du procédé de la figure 4, telles que la sous-étape S414.2, ne sont pas mises en œuvre dans le procédé de la figure 5.

Suite à la mise en œuvre de la sous étape S402 de détection, le capteur 310 peut activer la première puce électronique 302 (sous étape S404), qui peut alors commander le lecteur d'empreintes biométriques 308 afin de mettre en œuvre la sous étape S406 d'acquisition.

La donnée biométrique obtenue est stockée dans la première mémoire 314 de la première puce électronique 302 (étape S410), pendant la durée de stockage.

La durée de stockage correspond ici à la durée écoulée entre l'étape S400 d'obtention et la sous étape S414.3 de comparaison de l'étape S414 d'authentification (typiquement entre la mise en œuvre de la sous étape S406 de l'étape S400 et la sous étape S414.3), si cette durée est inférieure à la durée maximale de stockage, ou à la durée maximale de stockage dans le cas contraire.

La première puce électronique 302 peut déterminer la durée depuis obtention, puis la comparer à la durée de sécurité (sous étape S414.1 de l'étape S414 d'authentification), typiquement après la mise en œuvre de l'étape S412 de réception d'une commande d'initialisation d'une transaction sécurisée.

La sous étape S414.3 est ensuite mise en œuvre par la première puce électronique 302.

En variante, les sous étapes S414.1 et S414.3 peuvent être mises en œuvre de manière concomitante.

La sous étape S414.4 de vérification du nombre d'obtention peut aussi être mise en œuvre par la première puce électronique 302.

Comme indiqué ci-dessus, la vérification du nombre d'obtention d'une donnée biométrique peut être appliquée plus largement à n'importe quel procédé d'authentification d'un utilisateur d'un dispositif électronique au moyen d'une donnée biométrique, ce procédé comprenant au moins une obtention d'une donnée biométrique et étant par exemple mis en œuvre par le dispositif électronique 300 de la figure 3. Plus précisément, cette vérification peut être appliquée à un procédé différant du procédé de la figure 5 en ce que la commande d'initialisation d'une transaction sécurisée est reçue par la première puce électronique 302 avant le début de l'obtention de la donnée biométrique. Dans ce cas, l'évènement déclenchant l'acquisition peut être la réception de la commande d'initialisation de la transaction sécurisée, la première puce électronique 302 commandant, après réception de cette commande d'initialisation, le lecteur d'empreintes biométriques 308 afin d'acquérir la donnée biométrique.

## Revendications

1. Procédé d'authentification d'un utilisateur (U) d'un dispositif électronique (300) au moyen d'une donnée biométrique,
mis en œuvre par ledit dispositif électronique (300), ledit dispositif électronique (300) comprenant une première puce électronique (302) apte à effectuer une transaction sécurisée,
ledit procédé comprenant les étapes suivantes :
- obtention (S400) de la donnée biométrique,
- réception (S412) d'une commande d'initialisation d'une transaction sécurisée, envoyée par un terminal de transaction (320), l'étape (S400) d'obtention débutant avant l'étape (S412) de réception de la commande d'initialisation, puis
- authentification (S414) de l'utilisateur (U) au moyen de la donnée biométrique obtenue,
dans lequel l'étape (S414) d'authentification de l'utilisateur (U) est mise en œuvre par la première puce électronique (302), une authentification réussie de l'utilisateur (U) permettant d'autoriser la transaction sécurisée.

2. Procédé selon la revendication 1, dans lequel l'étape (S414) d'authentification de l'utilisateur (U) comprend une comparaison (S414.3) de la donnée biométrique obtenue avec une donnée biométrique de référence, stockée dans la première puce électronique (302), une correspondance entre la donnée biométrique obtenue et la donnée biométrique de référence étant une condition de réussite de l'authentification de l'utilisateur.

3. Procédé selon la revendication 1 ou 2, dans lequel l'étape (S414) d'authentification comprend une sous étape (S414.1) de vérification d'une règle de sécurité,
dans laquelle une durée depuis obtention, correspondant à la durée écoulée depuis la mise en œuvre de l'étape (S400) d'obtention de la donnée biométrique, est déterminée, puis comparée à une durée de sécurité, l'infériorité de la durée depuis obtention à la durée de sécurité étant une condition de réussite de l'authentification de l'utilisateur.

4. Procédé selon la revendication 3, dans lequel la valeur de la durée de sécurité est diminuée lorsque l'authentification de l'utilisateur échoue.

5. Procédé selon l'une quelconque des revendications 1 à 4, comprenant en outre une étape (S414.2) de transmission, par une deuxième puce électronique (304) du dispositif électronique (300) à la première puce électronique (302), de la donnée biométrique obtenue.

6. Procédé selon les revendications 3 et 5, dans lequel ladite donnée biométrique obtenue transmise par la deuxième puce électronique (304) comprend un horodatage, la durée depuis obtention étant déterminée à partir dudit horodatage.

7. Procédé selon la revendication 3 et 5, dans lequel la durée depuis obtention est transmise par la deuxième puce électronique (304) à la première puce électronique (302), suite à la réception, par la deuxième puce électronique (304), d'une requête de transmission envoyée par la première puce électronique (302).

8. Procédé selon l'une quelconque des revendications 5 à 7, comprenant en outre, avant l'étape (S414.2) de transmission, une étape (S410) de stockage de la donnée biométrique obtenue, dans une mémoire (318) de la deuxième puce électronique (304) du dispositif électronique (300), la donnée biométrique obtenue étant supprimée à la fin d'une durée de stockage.

9. Procédé selon l'une quelconque des revendications 1 à 8, comprenant en outre une étape de stockage de la donnée biométrique obtenue, dans une mémoire (314) de la première puce électronique (302), la donnée biométrique obtenue étant supprimée à la fin d'une durée de stockage.

10. Procédé selon l'une quelconque des revendications 5 à 9, dans lequel l'étape (S400) d'obtention comprend une sous étape d'acquisition (S406) d'une empreinte biométrique, et la sous étape suivante, mise en œuvre par un capteur d'activation (310) du dispositif électronique (300), avant la sous étape (S406) d'acquisition de l'empreinte biométrique :
- activation (S404) de la deuxième puce électronique (304), suite à la détection (S402) d'une commande d'activation,
la deuxième puce électronique (304) commandant alors un lecteur d'empreintes biométriques (308) afin de mettre en œuvre la sous étape (S406) d'acquisition.

11. Procédé selon l'une quelconque des revendications 1 à 9, dans lequel l'étape (S400) d'obtention comprend une sous étape d'acquisition (S406) d'une empreinte biométrique, et la sous étape suivante, mise en œuvre par un capteur d'activation (310) du dispositif électronique (300), avant la sous étape (S406) d'acquisition de l'empreinte biométrique :
- activation (S404) de la première puce électronique (302), suite à la détection (S402) d'une commande d'activation,
la première puce électronique (302) commandant alors un lecteur d'empreintes biométriques (308) afin de mettre en œuvre la sous étape (S406) d'acquisition.

12. Procédé selon l'une quelconque des revendications 1 à 11, dans lequel l'étape (S414) d'authentification comprend une sous étape (S414.4) de vérification que le nombre de mises en œuvre de l'étape (S400) d'obtention de la donnée biométrique entre la fin d'une transaction sécurisée précédant ladite transaction sécurisée et la fin de ladite transaction sécurisée est inférieur à un seuil donné de mises en œuvre,
l'infériorité du nombre de mises en œuvre de l'étape d'obtention au seuil donné de mises en œuvre étant une condition de réussite de l'authentification de l'utilisateur.

13. Procédé selon l'une quelconque des revendications 1 à 12, dans lequel la première puce électronique (302) requiert un code de sécurité dans le cas où l'authentification de l'utilisateur échoue, un code de sécurité valide permettant d'autoriser ladite transaction sécurisée ou une transaction sécurisée suivant ladite transaction sécurisée.

14. Dispositif électronique apte à mettre en œuvre un procédé selon l'une quelconque des revendications 1 à 13.

15. Programme d'ordinateur (P1) comportant des instructions pour l'exécution des étapes du procédé selon l'une quelconque des revendications 1 à 13 lorsque ledit programme est exécuté par un ordinateur.

16. Support d'enregistrement lisible par un ordinateur sur lequel est enregistré un programme d'ordinateur (P1) comprenant des instructions pour l'exécution des étapes du procédé selon l'une quelconque des revendications 1 à 13.
